# EUROPÄISCHE PATENTSCHRIFT

(11) **EP 3 414 206 B1**
(45) Veröffentlichungstag und Bekanntmachung des Hinweises auf die Patenterteilung: **11.12.2019**
(21) Anmeldenummer: 18725765.4
(22) Anmeldetag: 30.04.2018
(51) Int. Cl.: C03B 5/235, F23C 5/06, F23M 5/02

(54) **BRENNERHALTERUNG**
BURNER HOLDER
PORTE-CHALUMEAU

(30) Priorität: 05.05.2017 DE 102017109738
(43) Veröffentlichungstag der Anmeldung: 19.12.2018
(73) Patentinhaber: Beteiligungen Sorg GmbH & Co. KG, 97816 Lohr am Main (DE)
(72) Erfinder: SORG, Alexander, 63739 Aschaffenburg (DE); LINDIG, Matthias, 55218 Ingelheim (DE); WAGNER, Manfred, 97816 Lohr am Main (DE); WILHELM, Reinhard, 97737 Gemünden (DE)
(74) Vertreter: Keil & Schaafhausen Patent- und Rechtsanwälte PartGmbB
(86) Internationale Anmeldenummer: PCT/EP2018/061024
(87) Internationale Veröffentlichungsnummer: WO 2018/202618

(56) Entgegenhaltungen:
- EP-A1- 2 687 800
- DE-A1- 3 218 392
- DE-U1-202017 100 431
- FR-A- 843 045
- FR-A1- 2 772 117

## Beschreibung

Die Erfindung betrifft eine Brennerhalterung für eine Brennerlanze für gasförmigen und/oder flüssigen Brennstoff an einer Glasschmelzanlage sowie ein System zur Halterung einer Brennerlanze an der Glasschmelzanlage.

Herkömmliche Gasschmelzanlagen, z.B. für die Herstellung von Gebrauchsglas, besitzen eine Schmelzwanne, der an einem ersten Ende Rohstoffe und/oder Recycling-Glasscherben zugeführt werden und von der an dem gegenüberliegenden Ende eine Glasschmelze zur Fertigung abgezogen wird. Oberhalb der Glasschmelze befindet sich im Bereich des ersten Endes der Schmelzwanne ein Feuerungsraum. In den Feuerungsraum werden gasförmiger Brennstoff und Luft zur Verbrennung eingeführt. Zur Brennstoffzufuhr ist mindestens eine Brenneröffnung in einer Wand der Schmelzwanne ausgebildet. Die Brenneröffnung erstreckt sich hierbei von einer dem Feuerungsraum abgewandten Außenseite der Wand der Schmelzwanne und durch die Wand hindurch bis in den Feuerungsraum. Oft ist die Brenneröffnung in einem Brennerstein ausgebildet, der in die Wand der Glasschmelzanlage integriert ist. Der Brennerstein bildet ein Segment der Wand (z.B. einer Seitenwand) der Schmelzwanne, das aus einem Feuerfestmaterial besteht.

Zur Zufuhr von flüssigem Brennstoff wird in der Druckschrift FR 843 045 A ein Brenner beschrieben, der in eine durchgehende Öffnung eines Ofens eingesetzt ist. Der Brenner wird mittels eines trichterförmigen Wassermantels in der Öffnung des Ofens positioniert, an dessen ofenseitigem Ende ein in einem Kugellagergehäuse angeordnetes Kugelgelenk vorgesehen ist. Das Kugelgelenk bildet zudem das ofenseitige Ende der Brennstoff-Zuführung, welche in dem Kugelgelenk drehbar ist. Der Drehwinkel der Brennstoff-Zuführung im Kugelgelenk wird in vertikaler Richtung mittels Höhenverschiebung durch Drehung einer Mutter und Laufrollen auf Laufschienen bzw. einer Antriebskette erreicht. Die Drehung im Kugelgelenk in horizontaler Richtung wird erreicht durch eine Bewegung eines Jochs entlang einer gebogenen Gleitbahn. Der Nachteil der bekannten Lösung besteht darin, dass das Kugellagergehäuse und das Kugelgelenk unmittelbar an der heißen Atmosphäre des Ofens angeordnet sind und eine Temperatursenke bilden. An dieser Stelle kondensieren daher Verdampfungsprodukte und Staub (das Staubaufkommen einer mittelgroßen Schmelzanlage für 300 t Glas pro Tag beträgt über 1 Tonne). Diese Stoffe sind häufig alkalisch und mit einem hohen Schwefelanteil versehen, sodass erhöhter Verschleiß an dem ofenseitigen Ende der bekannten Brennstoff-Zuführung entsteht. Es besteht daher das Bedürfnis, einen direkten Kontakt des ofenseitigen Endes eines Brenners bzw. eines Kugelgelenks, in dem das ofenseitige Ende des Brenners angeordnet ist, mit der Ofenatmosphäre zu vermeiden.

Häufig wird zu diesem Zweck vor der Brenneröffnung eine Kühlplatte an der Wand der Glasschmelzanlage bzw. an dem Brennerstein montiert, die an ihrer dem Feuerungsraum abgewandten Außenseite eine Vertiefung aufweist. Von der Vertiefung aus erstreckt sich ein Durchgang bis zu einer Innenseite der Kühlplatte und mündet in die Brenneröffnung.

Ein Kopf einer Brennerlanze ist in der Vertiefung der Kühlplatte positioniert. Der Brennstoff - typischerweise gasförmiger fossiler Brennstoff - tritt aus dem Kopf der Brennerlanze aus und gelangt durch den Durchgang der Kühlplatte und die Brenneröffnung in den Feuerungsraum der Glasschmelzanlage.

In Druckschrift FR 2 772 117 A1 wird ein Injektor eines Brenners beschrieben. Der Injektor liegt an den Wänden eines Blocks aus feuerfestem Material an und ist darin durch eine mit Kühlrippen versehenen Platte befestigt. Der Block aus feuerfestem Material ist selbst in einer Öffnung in der Wand eines Glasschmelzofens montiert.

Kleine Änderungen der Position des Kopfes der Brennerlanze oder des Winkels der Brennerlanze gegenüber der Brenneröffnung können einen erheblichen Einfluss auf die Prozessbedingungen in dem Feuerungsraum der Glasschmelzanlage haben. Durch eine gezielte Einstellung der Orientierung und/oder der Position der Brennerlanze zu der Brenneröffnung können demnach die Prozessbedingungen auf einfache Weise geändert werden.

Die Brennerlanze wird von einer Brennerhalterung an der Glasschmelzanlage gehalten. Eine herkömmliche Brennerhalterung ist beispielsweise aus der Druckschrift DE 32 18 392 A1 bekannt. Diese Druckschrift beschreibt eine Druckfeder, welche die Brennerlanze gegen ein Kühlelement anpresst. Zur Veränderung des Winkels der Brennerlanze muss die gesamte Brennerhalterung der Brennerlanze gelöst werden. Dann wird der Winkel verstellt. Anschließend muss die Position der Brennerlanze in der Vertiefung der Kühlplatte wieder neu eingerichtet werden. Eine genau reproduzierbare Positions- bzw. Winkeländerung ist auf diese Weise nicht möglich. Zugleich sind Winkelveränderungen wegen der erforderliche Neueinpassung der Brennerlanze in die Vertiefung aufwendig und zeitintensiv.

Eine in ihrem Aufbau komplizierte Brennerhalterung wird in der Druckschrift EP 2 687 800 A1 beschrieben. Die bekannte Brennerhalterung umfasst in dem Halteabschnitt ein Parallelkurbelgetriebe, mit dem die Halterung für die Brennerlanze mit einem Montageabschnitt verbunden ist, der unterhalb der Brenneröffnung angeordnet ist.

Die Aufgabe der vorliegenden Erfindung besteht somit darin, eine wenig aufwendige Vorrichtung zu schaffen, die eine Änderung eines Winkels der Brennerlanze in einfacher und reproduzierbarer Weise ermöglicht. Insbesondere soll die Änderung des Winkels ohne eine Neujustierung der Brennerlanze ermöglicht werden. Weiter soll ein direkter Kontakt zwischen Brennerlanze und dem Inneren der Schmelzwanne vermieden werden.

Die obige Aufgabe wird gelöst durch eine Brennerhalterung für eine Brennerlanze an einer Glasschmelzanlage mit den Merkmalen des Anspruchs 1.

Erfindungsgemäß weist die Brennerhaltung eine Halteeinheit zur Befestigung bzw. Montage der Brennerlanze und eine Dichtplatte zur Befestigung der Brennerhalterung an der Glasschmelzanlage (d.h. der Schmelzwanne) auf. Die Dichtplatte ist zudem mit einer Vertiefung zur Aufnahme Kopfes der Brennerlanze versehen, wobei die Vertiefung zumindest einen Teil eines Durchgangs durch die Dichtplatte bildet, und wobei die Halteeinheit mit der Dichtplatte über mindestens ein erstes Drehlager verbunden ist, um das die Halteeinheit um eine erste Drehachse drehbar oder schwenkbar ist, wobei das Drehlager direkt an der Dichtplatte angebracht oder eingebettet oder über einen an der Dichtplatte angeordneten Tragarm mit der Dichtplatte verbunden ist. Die Länge des Tragarms richtet sich nach dem Radius des Kopfes der mit der Brennerhalterung an der Glasschmelzanlage zu befestigenden Brennerlanze, vorzugsweise liegt die Länge des Tragarms im Bereich von 100 mm bis 1000 mm, besonders bevorzugt zwischen 100 mm und 600 mm. Die äußere Form des Kopfes der Brennerlanze ist in der Regel als Halbkugel gestaltet, um eine Drehbarkeit des Brennerlanzenkopfes in der Vertiefung der Dichtplatte zu gewährleisten.

Die Vertiefung ist durch ihren kugelscheibenförmigen Abschnitt der Form des Kopfes der Brennerlanze angepasst, so dass der halbkugelförmige Kopf der Brennerlanze den Durchgang im Wesentlichen verschließt, wenn er in die Vertiefung kraftschlüssig eingepasst ist. Diese Passung verhindert, dass Falschluft durch einen zu großen Spalt zwischen dem Kopf und der Vertiefung in einen Feuerungsraum der Glasschmelzanlage gelangt.

Hierbei ist eine Kugelscheibe ist ein Teil einer Vollkugel, der von zwei parallelen Ebenen ausgeschnitten wird. Sie ist rotationssymmetrisch zu einer Rotationssymmetrieachse, welche senkrecht zu den zwei parallelen Ebenen verläuft. Die Abschlüsse der Kugelscheibe durch die zwei parallelen Ebenen bilden zwei Enden der Kugelscheibe. Im Sinne der vorliegenden Anmeldung gilt auch eine solche Vertiefung als Vertiefung mit kugelscheibenförmiger Grundform, deren Form nahezu einer Kugelscheibe entspricht. Insbesondere genügt es, wenn die zwei die Enden bildenden Ebenen nahezu parallel sind, beispielsweise um etwa 10° zueinander geneigt sind.

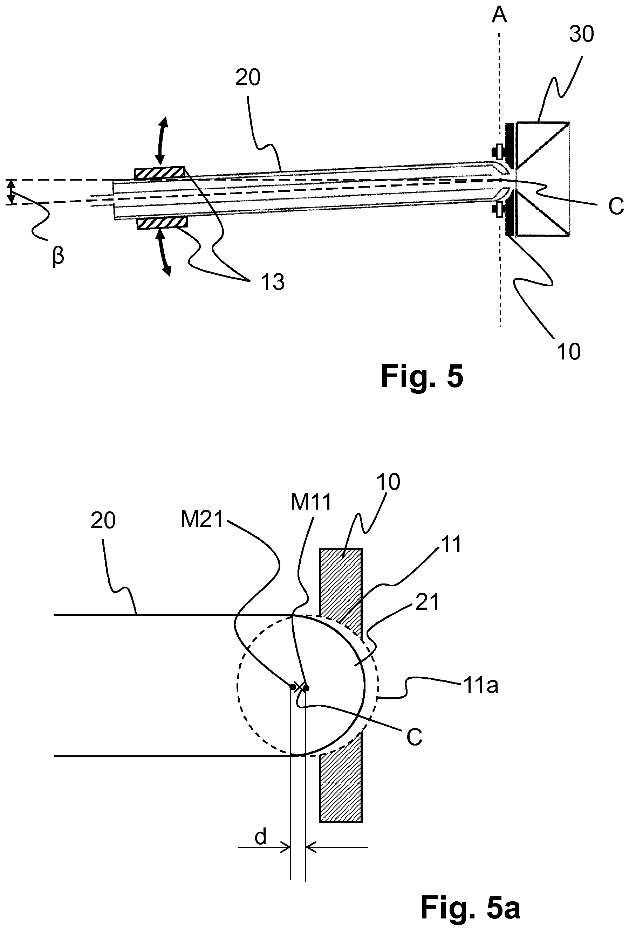

Wie oben bereits erläutert wurde, besitzt der Kopf der Brennerlanze in der Regel eine Spitze, die zumindest abschnittsweise die Form einer Halbkugel aufweist. Bei der vorliegenden Erfindung ist vorgesehen, dass ein Krümmungsmittelpunkt des Kopfes der Brennerlanze und der Krümmungsmittelpunkt des kugelscheibenförmigen Abschnitts der Vertiefung übereinander liegen, wenn die Brennerlanze an dem erfindungsgemäßen Brennerhalter montiert ist. In diesem Sinne ist der Krümmungsmittelpunkt des Kopfes auch dann in dem Krümmungsmittelpunkt des kugelscheibenförmigen Abschnitts der Vertiefung angeordnet, wenn ein kleinster Abstand der Krümmungsmittelpunkte maximal 20 % des Krümmungsradius' des Abschnitts der Vertiefung beträgt, besonders bevorzugt maximal 10 %, überaus bevorzugt maximal 5 % (siehe Fig. 5a und die unten hierzu folgenden Erläuterungen).

Erfindungsgemäß liegt der Krümmungsmittelpunkt des kugelscheibenförmigen Abschnitts der Vertiefung im Wesentlichen auf der ersten Drehachse. Bei der Einrichtung und der Montage der Brennerlanze an der Brennerhalterung wird diese so angeordnet, dass der Krümmungsmittelpunkt der halbkugelförmigen Spitze im Wesentlichen auf dem Krümmungsmittelpunkt des kugelscheibenförmigen Abschnitts der Vertiefung liegt, sodass die Passung zwischen dem Kopf und der Vertiefung auch beim Drehen der Halteeinheit und der daran montierten Brennerlanze um die erste Drehachse erhalten bleibt.

In diesem Sinne erstreckt sich die erste Drehachse auch dann durch den Krümmungsmittelpunkt des kugelscheibenförmigen Abschnitts der Vertiefung, wenn ein kleinster Abstand der ersten Drehachse zu dem Krümmungsmittelpunkt einen Abstand von maximal 20 % eines Krümmungsradius' der Vertiefung beträgt, besonders bevorzugt maximal 10 %, überaus bevorzugt maximal 5 %, und/oder wenn aufgrund von Toleranzen ein Krümmungsmittelpunkt der Vertiefung nicht exakt bestimmt werden kann.

In einem Ausführungsbeispiel weist die Dichtplatte zwei Tragarme auf, die jeweils zusammen mit der Halteeinheit ein erstes Drehlager bilden. Das erste Drehlager wird an den Tragarmen jeweils dort ausgebildet, wo die Halteeinheit mit dem jeweiligen Tragarm drehbar verbunden ist. Daher sind die Tragarme derart angeordnet, dass sie entlang der ersten Drehachse voneinander beabstandet sind.

Der mindestens eine Tragarm ist entweder einstückig mit der Dichtplatte ausgebildet oder an dieser fest, vorzugsweise lösbar, befestigt.

Der mindestens eine Tragarm erstreckt sich in einem Ausführungsbeispiel im Wesentlichen senkrecht zur Oberfläche der Dichtplatte, insbesondere steht der Tragarm senkrecht von der dem Brennerstein abgewandten Oberfläche der Dichtplatte ab. Entsprechend ist die erste Drehachse in einem vorgegebenen Abstand von der dem Brennerstein abgewandten Oberfläche der Dichtplatte und vorzugsweise parallel zu dieser Oberfläche angeordnet. Der Abstand ergibt sich durch den Abstand des ersten Drehlagers von dieser Oberfläche.

Die Vertiefung zur Aufnahme des Kopfes der Brennerlanze bildet zumindest einen Teil des Durchgangs durch die Dichtplatte. Ein äußeres Ende der Vertiefung an einer Außenseite bildet eine äußere Öffnung des Durchgangs. An einer der Außenseite gegenüberliegenden Innenseite der Dichtplatte ist eine innere Öffnung des Durchgangs ausgebildet. Der Durchgang erstreckt sich durch die Dichtplatte hindurch zwischen der äußeren Öffnung und der inneren Öffnung.

Bevorzugt verjüngt sich die Vertiefung zumindest in einem Abschnitt in Richtung von der äußeren Öffnung zu der inneren Öffnung. Insbesondere kann ein weiteres Ende der Vertiefung die äußere Öffnung des Durchgangs bilden.

Wenn die Vertiefung den gesamten Durchgang bildet (also nicht nur einen Teil des Durchgangs), dann wird die innere Öffnung durch ein dem äußeren Ende gegenüberliegenden inneren Ende der Vertiefung gebildet.

Wenn die Vertiefung nur einen Teil des Durchgangs bildet, dann verbindet ein Kanal das innere Ende der Vertiefung mit der inneren Öffnung. In diesem Fall bilden die Vertiefung und der Kanal zusammen den Durchgang. Bevorzugt ist der Kanal rotationssymmetrisch um eine Kanalachse ausgebildet. Der Kanal kann beispielsweise zylindrisch oder konisch ausgebildet sein.

Die Dichtplatte ist derart ausgestaltet, dass der Durchgang in eine Brenneröffnung der Glasschmelzanlage mündet oder übergeht, wenn die Dichtplatte an der Glasschmelzanlage befestigt ist. Genauer ist vorgesehen, dass die Innenseite der Dichtplatte der Glasschmelzanlage zugewandt ist und die innere Öffnung in die Brenneröffnung mündet. Insbesondere kann die Brenneröffnung in einem Brennerstein der Glasschmelzanlage ausgebildet sein und die Innenseite der Dichtplatte an einer Außenseite des Brennersteins anliegen. Bevorzugt ist die innere Öffnung der Form und/oder Größe der Brenneröffnung angepasst, besonders bevorzugt ist der Übergang stufenlos. Insbesondere ist der Durchmesser des Durchgangs an der Innenseite der Dichtplatte gleich dem Durchmesser der Brenneröffnung an der Außenseite des Brennersteins. Die Dichtplatte (und der Brennerstein) schirmen die Brennerlanze von dem Innenraum der Schmelzwanne ab. Eine Anlagerung von Staub und Kondensat aus der Atmosphäre der Schmelzwanne wird daher vermieden bzw. kommt nicht in Kontakt mit der Brennerlanze.

Die Brennerlanze kann vorzugsweise lösbar an der Halteeinheit montiert werden, wobei die Halteeinheit wie oben beschrieben an der Dichtplatte um eine erste Drehachse drehbar befestigt ist. Je nach Ausgestaltung des Kopfes und der Dichtplatte kann eine Düse des Kopfes der Brennerlanze, der an einem kopfseitigen Ende der Brennerlanze angeordnet ist, sich dann in den Durchgang der Dichtplatte erstrecken. Aus der Düse austretender Brennstoff gelangt in diesem Fall durch die innere Öffnung der Dichtplatte hindurch in den Feuerungsraum der Glasschmelzanlage. Es ist aber auch möglich, dass der Kopf und die Dichtplatte derart ausgestaltet sind, dass der Kopf der Brennerlanze so weit in die Vertiefung hineinragt, dass der Kopf der Brennerlanze mit seinem vorderen Ende an die Ebene der Innenseite der Dichtplatte heranragt. Dies ist insbesondere dann der Fall, wenn die Vertiefung allein den Durchgang bildet, dies bedeutet, dass kein Kanal(abschnitt) in dem Durchgang der Dichtplatte vorgesehen ist. Dann gelangt aus dem Brennstoffauslass des Kopfes der Brennerlanze austretender Brennstoff direkt in die Brenneröffnung der Glasschmelzanlage.

Wenn die Brennerlanze wie erfindungsgemäß vorgesehen an der Halteeinheit montiert ist und durch diese gehalten wird, dann kann die Brennerlanze mit der Halteeinheit um die erste Drehachse gedreht werden. Die erste Drehachse verläuft vorzugsweise horizontal, sie kann jedoch auch in jede beliebige andere Richtung verlaufen. Da die Halteeinheit um die erste Drehachse drehbar direkt oder über einen kurzen Tragarm an der Dichtplatte befestigt ist - beispielsweise mittels eines oder mehrerer Drehlager - wird die Halteeinheit und mit ihr eine an der Brennerhalterung montierte Brennerlanze bei der Drehung um die erste Drehachse geführt. Der erste Dreh- oder Schwenkwinkel der Halteeinheit in Bezug auf die Dichtplatte um die erste Drehachse beträgt beispielsweise maximal 90°, besonders bevorzugt maximal 60°. Weil die erste Drehachse im Bereich der Vertiefung der Dichtplatte oder nahe an der Vertiefung angeordnet ist und durch den Krümmungsmittelpunkt des Brennerkopfes verläuft, bleibt die Position des Kopfes der Brennerlanze in der Vertiefung abgesehen von der Drehung um die erste Drehachse zumindest im Wesentlichen unverändert. Durch die Form des Kopfes der Brennerlanze ist zudem die Passung zwischen dem Kopf und der Vertiefung nach der Drehung der Halteeinheit um die erste Drehachse sichergestellt. Wenn also ein erster Drehwinkel der Brennerlanze um die erste Drehachse aus prozessbedingten Gründen geändert werden muss, so kann die Halteeinheit mitsamt der Brennerlanze einfach um den erforderlichen Winkel gedreht werden, ohne dass der Kopf der Brennerlanze neu in die Vertiefung der Dichtplatte eingepasst werden muss. Nach dem Drehen um den erforderlichen Winkel um die erste Drehachse wird die Halteeinheit so arretiert, dass sich die Brennerlanze während des Betriebs der Glasschmelzanlage nicht bewegen kann.

Anders als bei herkömmlichen Brennerhalterungen bildet erfindungsgemäß die Dichtplatte selbst einen Teil der Brennerhalterung. Die Halteeinheit und damit die Brennerlanze wird durch die drehbare Befestigung an der Dichtplatte auch während der Drehung um die erste Achse sicher und präzise geführt, insbesondere relativ zu der Brenneröffnung.

Zur Verstellung des ersten Drehwinkels der Halteeinheit bzw. der Brennerlanze um die erste Drehachse muss die Brennerlanze nicht aus der Vertiefung herausgenommen werden. Entsprechend muss sie nach der Drehung nicht komplett neu eingerichtet bzw. justiert werden. Erfindungsgemäß genügt es, die Brennerhalterung mit der Dichtplatte und der mit ihr verbundenen Halteeinheit einmalig bei der Befestigung der Brennerhalterung an der Glasschmelzanlage zu justieren und auszurichten. Hierbei wird die Dichtplatte, vorzugsweise am ersten Drehlager, mit einer Befestigungsvorrichtung mit der Basis der Glasschmelzanlage verbunden, um die Position der Dichtplatte in Bezug auf die Glasschmelzanlage dauerhaft zu fixieren. Nach der Fixierung der Position der Dichtplatte ist lediglich eine Drehung um die erste Drehachse mittels des mindestens einen ersten Drehlagers erforderlich, um die Position der Brennerlanze, beispielsweise in Bezug auf den vertikalen Drehwinkel (die erste Drehachse verläuft in diesem Ausführungsbeispiel horizontal), zu verändern. Erfindungsgemäß ist die Halteeinheit nicht separat von der Dichtplatte mit der Glasschmelzanlage verbunden, sondern hängt gewissermaßen an der Dichtplatte und wird durch die Dichtplatte über das Drehlager der ersten Drehachse getragen.

Die vorgeschlagene Brennerhalterung ermöglicht es auf einfache Weise, die Prozessbedingungen schnell zu optimieren, und vermeidet Ausfallzeiten.

Zugleich ist dank der Führung an der Dichtplatte die Mechanik verglichen mit dem Stand der Technik einfach ausgestaltet. Die vorgeschlagene Brennerhalterung umfasst nur wenige Bauteile und ist deshalb einfach, schnell und günstig herstellbar. Aufgrund der wenigen Bauteile ist sie vergleichsweise robust gegen äußere Einflüsse. Dies ist aufgrund der hohen thermischen Belastung wegen der Nähe zu der Glasschmelzanlage ein weiterer Vorteil der erfindungsgemäßen Lösung.

In einem Ausführungsbeispiel der Brennerhalterung umfasst die Halteeinheit eine Halteplatte, die über mindestens einen Tragarm mit dem Drehlager verbunden ist. Auf oder an der Halteplatte ist eine vorzugsweise rinnenförmige Aufnahmeeinrichtung für die Brennerlanze fest, vorzugsweise lösbar, befestigt. An der Aufnahmeeinrichtung ist in einem Ausführungsbeispiel ein Klemmring vorgesehen, mit dem die Brennerlanze auf der Aufnahmeeinrichtung festgelegt werden kann. Die Aufnahmeeinrichtung erstreckt sich vorzugsweise parallel zu einer Längsachse der Vertiefung der Dichtplatte bzw. parallel zu einer Längsachse der Brennerlanze, wenn diese auf der Halteeinheit festgelegt ist. Andere Befestigungsmöglichkeiten für die Brennerlanze an der Halteeinheit sind selbstverständlich ebenfalls möglich. Der Vorteil der Verwendung eines Klemmrings besteht darin, dass die Brennerlanze bei der erstmaligen Einrichtung der Brennerhalterung an der Glasschmelzanlage so lange in Richtung ihrer Längsachse verschoben werden kann, bis sie mit ihrem Kopf abdichtend an der Vertiefung der Dichtplatte anliegt. Anschließend wird der Klemmring zusammengezogen oder eine durch den Klemmring hindurchgehende Stellschraube in den Klemmring hineingedreht, um die Brennerlanze an dem Klemmring und somit an der Halteeinheit festzulegen. Nach der Befestigung mit dem Klemmring oder einer sonstigen Festlegung auf der Halteeinheit bewegt sich die Brennerlanze mit der Halteeinheit.

Die vorgeschlagene Brennerhalterung ist insbesondere für alle Glasschmelzanlagen verwendbar, die mit Unterbankfeuerung betrieben werden. Das gilt für seitenbeheizte Glasschmelzanlagen mit mehreren Brennerports, die jeweils mit mehreren Brennerlanzen bestückt werden, und ebenso für sogenannte U-Flammenwannen mit zwei nebeneinander in der Flammenwanne rückseitig angeordneten Vorwärmekammern und Brennerports.

Bevorzugt ist die Dichtplatte derart ausgestaltet, dass sie direkt an einer Außenseite des Brennersteins der Glasschmelzanlage mit der Brenneröffnung anliegt, wenn sie an der Glasschmelzanlage befestigt ist.

In einem weiteren Ausführungsbeispiel der Erfindung weist die Brennerhalterung, wie oben bereits angedeutet wurde, eine Befestigungsvorrichtung für die Dichtplatte auf, mit welcher die Dichtplatte an einer Basis der Schmelzwanne der Glasschmelzanlage (z.B. der Stahlbau der Glasschmelzanlage) befestigt werden kann. Die Befestigungsvorrichtung hält die Dichtplatte an einem Bereich der Außenseite der Wand der Glasschmelzanlage mit der Brenneröffnung. Mit anderen Worten liegt die Dichtplatte, wenn sie mittels der Befestigungsvorrichtung an der Glasschmelzanlage befestigt ist, direkt an der Außenseite der Glasschmelzanlage an, und zwar in einem Bereich der Außenseite, in dem die Brenneröffnung angeordnet ist. Insbesondere kann die Befestigungsvorrichtung derart ausgestaltet sein, dass sie die Dichtplatte direkt an einer Außenseite des Brennersteins mit der Brenneröffnung halten kann. Die Befestigungsvorrichtung ist beispielsweise als Tragarm ausgebildet, welche mit dem ersten Drehlager der Dichtplatte verbunden ist und dieses an der Außenseite der Glasschmelzanlage, z.B an deren Basis, festlegt.

Alternativ oder zusätzlich kann die Dichtplatte unmittelbar an der Wand der Glasschmelzanlage mit der Brenneröffnung befestigbar sein, besonders bevorzugt an dem Brennerstein mit der Brenneröffnung.

In einer Weiterbildung der Erfindung ist die Halteeinheit abnehmbar an der Dichtplatte befestigt. Das erleichtert den Aufbau sowie Wartungs- und Reparaturarbeiten. Zusätzlich kann zwischen der Dichtplatte und dem Brennerstein eine Verschleißplatte vorgesehen sein. Diese wird durch die Dichtplatte an dem Brennerstein gehalten. Dadurch wird ein Austausch der im Betrieb der Glasschmelzanlage thermisch stark belasteten Dichtplatte (bzw. der Verschleißplatte) erheblich vereinfacht. Die Verschleißplatte kann leicht ausgetauscht werden, wenn sie wegen der hohen thermischen Belastung durch den Betrieb der Glasschmelzanlage geschädigt ist.

In einer Weiterbildung der Erfindung ist die Dichtplatte als Kühlplatte, vorzugsweise mit Kühlrippen und/oder Kühlrinnen, ausgeführt, wobei die Kühlrippen und/oder Kühlrinnen an der Seite der Dichtplatte, die dem Brennerstein abgewandt ist, angeordnet ist. Alternativ oder zusätzlich kann an der und/oder in der Dichtplatte eine Kühlvorrichtung vorgesehen sein. Dadurch wird die thermische Belastung der Brennerlanze, insbesondere des Kopfes der Brennerlanze, erheblich reduziert. Die Kühlvorrichtung kann beispielsweise als eine durch die Dichtplatte hindurch geführte Wasserkühlung und/oder an der Dichtplatte vorgesehene Luftkühlung ausgebildet sein. Die als Luftkühlung ausgebildete Kühlvorrichtung lässt beispielsweise von unten Luft an die Dichtplatte strömen.

In einem weiteren, vorteilhaften Ausführungsbeispiel der Erfindung weist die Dichtplatte oder der an ihr angeordnete Tragarm ein erstes Lagerelement (z.B. eine Lagerbuchse) auf und die Halteeinheit ein zweites Lagerelement (z.B. eine Lagerachse) auf, wobei das erste Lagerelement und das zweite Lagerelement zusammenwirken und das erste Drehlager bilden, über das die Halteeinheit an der Dichtplatte um die erste Drehachse drehbar befestigt ist. Indem die Halteeinheit und die Dichtplatte gemeinsam das Drehlager ausbilden, werden vergleichsweise wenige Teile und wenig Platz benötigt. Zudem wird ein Verbinden, Trennen und ggf. Wiederverbinden der Halteeinheit mit der Dichtplatte vereinfacht. In einem Ausführungsbeispiel sind an der Außenseite der Dichtplatte an zwei gegenüberliegenden Seiten der Vertiefung jeweils erste Lagerelemente angeordnet und die Halteeinheit weist zwei zweite Lagerelemente auf, wobei jeweils eines der ersten Lagerelemente und eines der zweiten Lagerelemente zusammen ein erstes Drehlager bilden. Der Abstand jedes Lagerelements von der Mittelachse der Vertiefung beträgt vorzugsweise 80 mm bis 400 mm, besonders bevorzugt 80 mm bis 250 mm.

In einem Ausführungsbeispiel weist die Brennerhalterung ferner eine Pendelstütze (d.h. ein Pendelstab in der Form eines Druckstabs) und einen Stellantrieb zur Drehung der Halteeinheit um die erste Drehachse auf, wobei ein der Halteeinheit zugewandtes Ende der Pendelstütze mit der Halteeinheit und ein entgegengesetztes Ende der Pendelstütze mit dem Stellantrieb verbunden ist. Der Stellantrieb kann auch als weitere Pendelstütze ausgeführt sein. Die Halteeinheit und gegebenenfalls die darauf montierte Brennerlanze können durch den Stellantrieb um die erste Drehachse gedreht werden. Ein Drehen per Hand ist somit nicht erforderlich. Die Pendelstütze vereinfacht die Handhabung der Brennerhalterung und erhöht deren Wirtschaftlichkeit. Die Pendelstütze kann mit der Halteeinheit an einer Stelle verbunden sein, die dem mit der Dichtplatte verbundenen Ende der Halteeinheit gegenüberliegt. Vorzugsweise erfolgt die Verbindung der Pendelstütze mit der Halteeinheit über ein erstes Gelenk und/oder die Verbindung der Pendelstütze mit dem Stellantrieb über ein zweites Gelenk. Mit der Pendelstütze werden Linearbewegungen des Stellantriebs in Drehbewegungen der Halteeinheit um die erste Drehachse umgewandelt. Der Stellantrieb ist vorzugsweise als Linearantrieb ausgeführt. In einem Ausführungsbeispiel erlaubt ein kardanisches Gelenk an der Pendelstütze, dass diese etwas abweichend von einer mittleren Längsachse der Halteeinheit, vorzugsweise der Halteplatte, anzubringen. Die Pendelstütze bewirkt die Dreh- bzw. Schwenkbewegung der Halteeinheit um die erste Drehachse durch das mindestens eine erste Drehlager, beispielsweise in vertikaler Richtung, wenn die Drehachse horizontal verläuft.

In einem besonders bevorzugten Ausführungsbeispiel der Erfindung ist der Stellantrieb pneumatisch und/oder elektrisch ausgeführt. Ein pneumatischer elektrischer Stellantrieb ist besonders gut geeignet für die hohe thermische Belastung in der unmittelbaren Nähe des Glasschmelzofens. Ein elektrischer Stellantrieb ist besonders einfach und kostengünstig zu implementieren. Zudem sind mit einem Elektromotor leichter genau reproduzierbare Feineinstellungen einer Drehposition der Halteeinheit erreichbar. Alternativ ist natürlich auch eine händische Verstellung der Halteeinheit oder die Verwendung einer mit dieser verbundenen handbetriebenen Verstellvorrichtung anstelle des Stellantriebs möglich.

In einem weiteren, besonders bevorzugten Ausführungsbeispiel weist die Brennerhalterung eine Steuereinheit zur Ansteuerung des Stellantriebs auf. Überaus bevorzugt erlaubt die Steuereinheit ein ferngesteuertes und/oder automatisiertes Ansteuern des Stellantriebs. Dadurch kann die Einstellung vereinfacht und optimiert werden. Außerdem trägt ein ferngesteuertes und/oder automatisiertes Ansteuern des Stellantriebs zur Arbeitssicherheit bei, wenn die Einstellung während der Befeuerung der Glasschmelzanlage verändert werden soll, da sich zur Einstellung keine Person in die Nähe der heißen Brenneröffnung begeben muss.

In einem weiteren, vorteilhaften Ausführungsbeispiel der Erfindung weist die Brennerhalterung zweites Drehlager auf, mittels dem die Brennerlanze, wenn sie an der Halteeinheit montiert ist, um eine zweite Drehachse gedreht oder verschwenkt werden kann, wobei die zweite Drehachse schräg zu der ersten Drehachse verläuft. Die zweite Drehachse verläuft also nicht parallel zur ersten Drehachse. Der zweite Drehwinkel der Drehung eines Elements der Halteeinheit, beispielsweise der Aufnahmeeinrichtung für die Brennerlanze, um die zweite Drehachse in Bezug auf die Dichtplatte beträgt beispielsweise maximal 50°, vorzugsweise maximal 30°. Ein Spielraum, in dem die montierte Brennerlanze in der Vertiefung bewegt werden kann, ist somit nicht auf die Drehung um die erste Drehachse beschränkt. Insbesondere ist eine Überlagerung der Drehung um die erste Drehachse und der Drehung um die zweite Drehachse möglich.

Wenn die Vertiefung eine zumindest abschnittsweise kugelscheibenförmige Form aufweist, dann ist es vorteilhaft, dass sich sowohl die erste Drehachse als auch die zweite Drehachse durch den Krümmungsmittelpunkt des kugelscheibenförmigen Abschnitts der Vertiefung der Dichtplatte erstrecken. Der Krümmungsmittelpunkt der Vertiefung entspricht also einem Drehpunkt für eine Drehung Halteeinheit (und gegebenenfalls der darauf montierten Brennerlanze) um die erste Drehachse und/oder die zweite Drehachse. Insbesondere wenn die montierte Brennerlanze eine Spitze mit der Grundform einer Halbkugel aufweist, ist sichergestellt, dass der Kopf beim Drehen stets in die Vertiefung eingepasst bleibt, und zwar unabhängig davon, ob die Drehung um die erste Drehachse und/oder die zweite Drehachse erfolgt.

Besonders bevorzugt ist zumindest ein Teil der zweiten Drehachse an einem der Dichtplatte zugewandten Ende der Halteinheit vorgesehen. Dadurch ist eine sichere Fixierung der zweiten Drehachse in Bezug auf den Kopf der gegebenenfalls an der Halteeinheit montierten Brennerlanze sichergestellt. In einem Ausführungsbeispiel ist in der Halteplatte der Halteeinheit ein drittes Lagerelement (z.B. in Form einer Lagerbuchse) und an der vorzugsweise rinnenförmigen Aufnahmeeinrichtung ein viertes Lagerelement (z.B. ein Lagerachse) vorgesehen, die zusammen das zweite Drehlager ausbilden und zusammenwirken, um die an der Halteeinheit montierte Brennerlanze um die zweite Drehachse zu drehen oder zu verschwenken. Alternativ zu dem dritten und vierten Lagerelement kann zum Verdrehen oder Verschwenken um die zweite Drehachse in der Halteplatte mindestens ein bogenförmiges Langloch vorgesehen sein, wobei in jedem Langloch ein von der Aufnahmeeinrichtung abstehender Haltezapfen geführt wird. Beispielsweise kann die zweite Drehachse vertikal verlaufen, so dass die Aufnahmeeinrichtung horizontal um die zweite Drehachse gedreht werden kann. Nach dem Drehen um den erforderlichen Winkel um die zweite Drehachse, um die Prozessbedingungen in der Glasschmelzanlage zu beeinflussen, wird die Halteeinheit so arretiert, dass sich die Brennerlanze während des Betriebs der Glasschmelzanlage nicht bewegen kann. Vorzugsweise wird der Winkel der Halteeinheit bezogen auf die zweite Drehachse beim Einrichten der Brennerlanze einmalig festgelegt, so dass zur Optimierung der Verbrennung in der Schmelzwanne nur der Drehwinkel um die erste Drehachse verändert wird.

In einem weiteren, besonders vorteilhaften Ausführungsbeispiel der erfindungsgemäßen Brennerhalterung verläuft die die zweite Drehachse orthogonal zu der ersten Drehachse. Wenn die erste Drehachse und die zweite Drehachse orthogonal zueinander verlaufen, ist der Bewegungsspielraum der montierten Brennerlanze besonders groß. Insbesondere kann sich die erste Drehachse in einer horizontalen Richtung erstrecken und die zweite Drehachse kann sich senkrecht zur ersten Drehachse in einer vertikalen Richtung (parallel zu einer Richtung der Schwerkraft) erstrecken.

Die oben angegebene Aufgabe wird auch durch ein System mit einer oben beschriebenen Brennerhalterung und einer Brennerlanze gelöst, wobei die Brennerlanze derart an der Halteeinheit befestigt ist, dass der Kopf der Brennerlanze in der Vertiefung der Dichtplatte angeordnet ist und an der Innenseite der Vertiefung anliegt. Wie oben bereits erläutert wurde, weist der Kopf der Brennerlanze vorzugsweise eine Spitze auf, die zumindest abschnittsweise die Form einer Halbkugel besitzt. Es versteht sich, dass die Spitze nicht exakt wie eine Halbkugel geformt sein muss. Beispielsweise kann die Form der Spitze von einer Halbkugel durch eine Düse für den Auslass von Brennstoff, durch Kühlrippen, Kühlrillen, durch Eingriffselemente zum An- oder Abschrauben des Kopfes und/oder durch Fertigungstoleranzen abweichen. Dieses System stellt ein besonders gutes, zuverlässiges und genaues Zusammenwirken von der Brennerhalterung und der Brennerlanze sicher, da die Brennerhalterung und die Brennerlanze aufeinander abgestimmt sind. Selbstverständlich kann die Brennerhalterung des Systems auch Merkmale der anderen beschriebenen Ausführungsbeispiele aufweisen, sofern sie nicht im Widerspruch zu dem zuletzt beschriebenen Ausführungsbeispiel stehen.

In einem weiteren, vorteilhaften Ausführungsbeispiel handelt es sich bei der Glasschmelzanlage, an der die erfindungsgemäße Brennerhalterung befestigt wird, um eine seitenbeheizte Glasschmelzanlage. Sie kann mindestens zwei Brennerports aufweisen, wobei jeder Brennerport jeweils mit mindestens zwei Brennerlanzen bestückbar ist.

In noch einem weiteren, vorteilhaften Ausführungsbeispiel weist die Glasschmelzanlage eine U-Flammenwanne mit zwei nebeneinander in der Flammenwanne rückseitig angeordneten Vorwärmekammern und Brennerports auf.

Zur Befestigung einer Brennerlanze an einer Glasschmelzanlage, insbesondere unter Verwendung einem der zuvor beschriebenen Ausführungsbeispiele der Brennerhalterung, werden vorzugsweise die folgenden Schritte durchgeführt:
- Befestigung einer Dichtplatte mit einer Vertiefung zur Aufnahme eines Kopfes einer Brennerlanze an der Glasschmelzanlage (d.h. der Schmelzwanne), wobei die Vertiefung zumindest einen Teil eines Durchgangs durch die Dichtplatte bildet, wobei eine innere Öffnung des Durchgangs der Dichtplatte in eine Brenneröffnung in einer Außenseite der Glasschmelzanlage mündet und ein weiteres Ende der Vertiefung eine äußere Öffnung des Durchgangs bildet,
- Befestigung einer Halteeinheit an der Dichtplatte, so dass die Halteeinheit mittels des ersten Drehlagers um eine erste Drehachse gedreht werden kann, und
- Montage (Befestigung) der Brennerlanze an der Halteeinheit, wobei sich ein Kopf der Brennerlanze in die Vertiefung der Dichtplatte hinein erstreckt, so dass aus einem kopfseitigen Ende der Brennerlanze austretender Brennstoff durch die Brenneröffnung in einen Feuerungsraum der Glasschmelzanlage gelangen kann.

Insbesondere kann das Verfahren dazu verwendet werden, eine Brennerlanze unter Verwendung einer Brennerhalterung, wie sie oben beschrieben wird, und/oder eines Systems, wie es oben beschrieben wurde, an der Glasschmelzanlage zu befestigen.

Die für die oben beschriebene Brennerhalterung angeführten Ausführungsbeispiele und Vorteile gelten entsprechend für das erfindungsgemäße System.

Die Erfindung wird nachfolgend anhand von Ausführungsbeispielen und unter Bezugnahme auf die Figuren erläutert. Dabei bilden alle beschriebenen und/oder bildlichen Merkmale für sich oder in beliebiger Kombination den Gegenstand der Erfindung, auch unabhängig von ihrer Zusammenfassung in den Ansprüchen oder deren Rückbezügen.

Es zeigen schematisch:
- Fig. 1: ein erstes Ausführungsbeispiel einer erfindungsgemäßen Brennerhalterung mit einer auf dieser montierten Brennerlanze in einem Längsschnitt in einer Ansicht von der Seite,
- Fig. 2: die Brennerhalterung gemäß Fig. 1 in einer Ansicht von der Seite,
- Fig. 3: die Brennerhalterung gemäß Fig. 1 in einer weiteren Ansicht von der Seite zur Darstellung eines ersten Drehwinkels,
- Fig. 4: die Brennerhalterung gemäß Fig. 1 in einem Längsschnitt in einer Ansicht von oben,
- Fig. 5: die Brennerhalterung gemäß Fig. 1 in einem Längsschnitt in Ansicht von oben zur Darstellung eines zweiten Drehwinkels,
- Fig. 5a: die Dichtplatte der Brennerhalterung gemäß Fig. 1 und den Kopf der Brennerlanze in einem Querschnitt,
- Fig. 6: ein zweites Ausführungsbeispiel einer erfindungsgemäßen Brennerhalterung mit einer Brennerlanze sowie einem Abschnitt der Wand der Glasschmelzanlage in einer Ansicht von der Seite und teilweise geschnitten,
- Fig. 7: einen der Glasschmelzanlage zugewandter Abschnitt der Brennerhalterung und der Brennerlanze gemäß Fig. 6 sowie einen Abschnitt der Wand der Glasschmelzanlage in einer Ansicht von der Seite und teilweise geschnitten,
- Fig. 8: die Brennerhalterung und die Brennerlanze mit einem Abschnitt der Wand der Glasschmelzanlage gemäß Fig. 6 in einer Ansicht von oben und teilweise geschnitten,
- Fig. 9: die Brennerhalterung gemäß Fig. 6 in einer perspektivischen Ansicht von der Seite,
- Fig. 10: die Brennerhalterung gemäß Fig. 6 in einer Ansicht von der Seite,
- Fig. 11: die Brennerhalterung gemäß Fig. 6 in einer Ansicht von oben,
- Fig. 12: die Brennerhalterung gemäß Fig. 6 in einer Ansicht von hinten,
- Fig. 13: einen Klemmring der Brennerhalterung gemäß Fig. 6 in einer perspektivischen Ansicht von der Seite,
- Fig. 14: den Klemmring gemäß Fig. 13 in einer Ansicht von vorn und
- Fig. 15: ein drittes Ausführungsbeispiel einer erfindungsgemäßen Brennerhalterung mit einer Brennerlanze sowie einem Abschnitt der Wand der Glasschmelzanlage in einer Ansicht von der Seite und teilweise geschnitten.

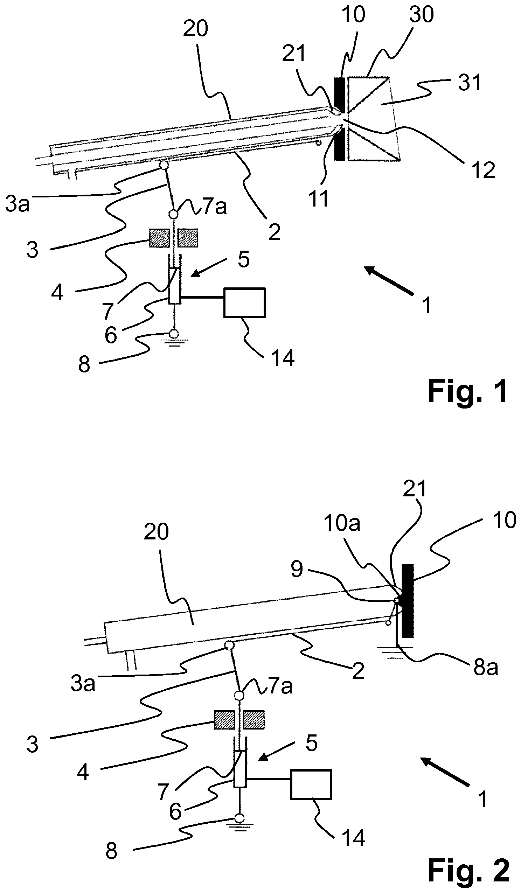

Die in Fig. 1 dargestellte Brennerhalterung 1 gemäß eines ersten Ausführungsbeispiels der vorliegenden Erfindung, welches das Prinzip der vorliegenden Erfindung verdeutlichen soll, setzt sich zusammen aus einer Halteeinheit 2 und einer Dichtplatte 10. An der Halteeinheit 2 ist eine Brennerlanze 20 fest montiert, wobei die Brennerlanze 20 an sich kein Bestandteil der Brennerhalterung 1 ist. Die Brennerlanze 20 und die Halteeinheit 2 bilden zusammen das erfindungsgemäße System. Zusätzlich zu der Brennerhalterung 1 und der Brennerlanze 20 ist außerdem ein Brennerstein 30 einer Glasschmelzanlage mit einer Brenneröffnung 31 im Schnitt abgebildet.

Die Dichtplatte 10 liegt kraftschlüssig mit ihrer Innenseite an einer Außenseite des Brennersteins 30 an, die einem Feuerungsraum der Glasschmelzanlage (Schmelzwanne) abgewandt ist. Die Befestigung der Dichtplatte 10 an dem Brennerstein 30 erfolgt mittels einer Befestigungsvorrichtung 8a, die mit dem Brennerstein 30 oder einer Basis der Glasschmelzanlage verbunden ist. In einer Außenseite der Dichtplatte 10, welche dem Brennerstein 30 gegenüberliegt, ist eine zumindest abschnittsweise kugelscheibenförmige Vertiefung 11 vorgesehen. An die kugelscheibenförmige Vertiefung 11 schließt sich ein Kanal 12 an. Die kugelscheibenförmige Vertiefung 11 und der Kanal 12 bilden zusammen einen Durchgang 11, 12, der durch die Dichtplatte 10 hindurch geht. Ein weites Ende der kugelscheibenförmigen Vertiefung 11 an der Außenseite der Dichtplatte 10 dient als eine äußere Öffnung des Durchgangs 11, 12. Der Kanal 12 bildet an der Innenseite der Dichtplatte 10 eine innere Öffnung des Durchgangs 11, 12 aus. Die innere Öffnung des Durchgangs 11 mündet in die Brenneröffnung 31.

Die Brennerlanze 20 führt dem Feuerungsraum der Glasschmelzanlage fossilen Brennstoff zu. Ein im Wesentlichen abgerundeter, vorzugsweise halbrunder, Kopf 21 der Brennerlanze 20 ist in die Vertiefung 11 kraftschlüssig eingepasst. Aus einer Düse im Kopf 21 der Brennerlanze 20 tritt Brennstoff aus und gelangt durch den Kanal 12 und die Brenneröffnung 31 in den Feuerungsraum der Glasschmelzanlage, um nach/durch Verbrennung diesen zu beheizen.

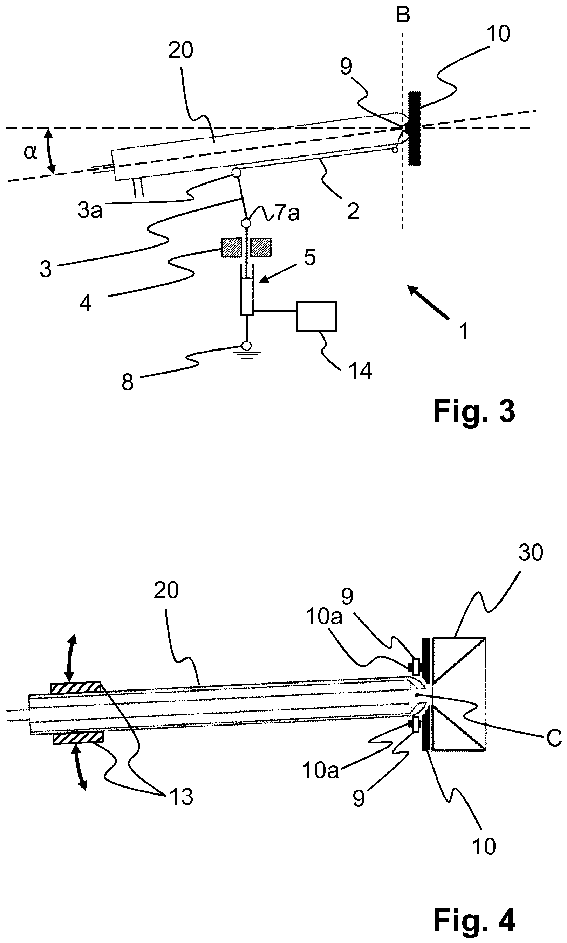

In den Fig. 2 und 4 ist zu erkennen, dass die Halteplatte 2 der Brennerhalterung 1 über zwei horizontal nebeneinander liegende erste Drehlager 9 an der Dichtplatte 10 der Brennerhalterung 1 befestigt ist. Jedes erstes Drehlager 9 ist direkt mit der Dichtplatte 10 verbunden. Hierfür ist die Dichtplatte 10 an je einem seitlich an der Dichtplatte 10 angeordneten und mit dieser einstückig ausgebildeten Tragarm 10a mit zwei Lagerbuchsen versehen. Die Tragarme 10a sind einander gegenüberliegend neben der äußeren Öffnung der Vertiefung 11 angeordnet. Die Halteeinheit 2 bildet an ihrem dichtplattenseitigen Ende zwei entsprechende, gegenüberliegende Lagerachsen aus, wobei jede Lagerachse mit der jeweils zugeordneten Lagerbuchse der Dichtplatte 10 zusammenwirkt. Jeweils eine der Lagerbuchsen der Dichtplatte 10 und eine der Lagerachsen der Halteeinheit 2 wirken zusammen als ein erstes Drehlager 9. Mittels des ersten Drehlagers 9 kann die Halteeinheit 2 und mit ihr die Brennerlanze 20 in Bezug auf die Dichtplatte 10 um einen ersten Drehwinkel α (siehe Fig. 3) in vertikaler Richtung um die horizontal verlaufende erste Drehachse A (siehe Fig. 5) gedreht werden.

Fig. 2 zeigt außerdem, dass eine Pendelstütze 3 die Halteeinheit 2 von unten stützt. Die Pendelstütze 3 verbindet ein Ende der Halteeinheit 2, das von der Dichtplatte 10 weg zeigt, mit einem pneumatischen Stellantrieb 5. Die Pendelstütze 3 ist über ein erstes Gelenk 3a an der Halteeinheit 2 befestigt. In dem Stellantrieb 5 wird ein Kolben 7 in einem Zylinder verschoben. Eine Kolbenstange verbindet den Kolben 7 mit einem unteren, zweiten Gelenk 7a der Pendelstütze 3. Ein Lager 4 führt die Kolbenstange in vertikaler Richtung. Der Stellantrieb 5 ist durch eine Befestigung 8 fest mit der Basis (z.B. der Stahlbau) der Schmelzwanne der Glasschmelzanlage verbunden. Auch das Lager 4 ist fest mit der Glasschmelzanlage verbunden.

Durch den Stellantrieb 5 wird die Kolbenstange in vertikaler Richtung, also nach oben oder unten, bewegt. Da das der Dichtplatte 10 abgewandte Ende der Halteeinheit 2 über die Pendelstütze 3 mit dem Stellantrieb 5 verbunden ist, wird durch den Stellantrieb 5 auch das der Dichtplatte 10 abgewandte Ende der Halteeinheit 2 nach oben oder unten bewegt. Wenn das der Dichtplatte 10 abgewandte Ende der Halteplatte 2 angehoben oder abgesenkt wird, dreht sich die Halteeinheit 2 wegen der Befestigung der Halteplatte 2 über die Drehgelenke 9 an der Dichtplatte 10 um einen Winkel α (siehe Fig. 3) in vertikaler Richtung um die horizontal verlaufende erste Drehachse A (siehe Fig. 5).

Der Stellantrieb 5 kann, wie in Fig. 2 dargestellt, mit einer Steuereinrichtung 14 verbunden sein. Mit der Steuereinrichtung 14 kann der Stellantrieb 5 ferngesteuert und/oder automatisch angesteuert werden. Anstelle des pneumatischen Stellantriebs 5 kann beispielsweise auch ein elektrischer Stellantrieb die Halteeinheit 2 wie oben beschrieben in vertikaler Richtung drehen. Alternativ kann die Drehung manuell erfolgen.

In Fig. 3 ist dargestellt, dass der erste Drehwinkel α der Halteplatte 2 in einer vertikalen Richtung durch den Stellantrieb 5 einstellbar bzw. verstellbar ist. Damit wird gleichzeitig der erste Drehwinkel α für die Brennerlanze 20 auf der Halteplatte 2 eingestellt bzw. verstellt. Die Drehung wird um die horizontale erste Drehachse A (siehe Fig. 5) bewirkt, die mit einer Längsrichtung der Lagerachsen der ersten Drehlager 9 zusammenfällt. In einem besonders bevorzugten Ausführungsbeispiel liegen der Krümmungsmittelpunkt der zumindest abschnittsweise kugelscheibenförmigen Vertiefung 11 und, wenn die Brennerlanze an der Halteeinheit 2 festgelegt ist, ein Krümmungsmittelpunkt des Kopfes 21 der Brennerlanze 20 genau aufeinander und ferner auf der ersten Drehachse A. Dadurch bleibt der Kopf 21 der Brennerlanze auch bei einer Veränderung des ersten Drehwinkels α stets in die kugelscheibenförmige Vertiefung 11 abdichtend eingepasst. Die an der Halteplatte 2 montierte Brennerlanze 20 kann also um die erste Drehachse A vorzugsweise stufenlos gedreht werden, ohne dass der Kopf 21 danach neu in die zumindest abschnittsweise kugelscheibenförmige Vertiefung 11 eingepasst werden muss.

In den Fig. 4 und Fig. 5 ist ersichtlich, dass die Brennerlanze 20 mit der erfindungsgemäßen Brennerhalterung 1 außerdem um eine zweite, vertikale Drehachse B (siehe Fig. 3) gedreht werden kann. Eine in den Fig. 1 bis 5 nicht näher dargestellte Aufnahmeeinrichtung der Halteeinheit 2 ist an ihrem Ende, das dem Kopf 21 abgewandt ist, mit einer Schwenkhalterung 13 mit der Halteeinheit 2 verbunden. Außerdem ist die Aufnahmeeinrichtung der Halteeinheit an ihrem vorderen Ende durch ein zweites Drehlager drehbar auf der Halteeinheit 2 gelagert. Die Schwenkhalterung 13 der Halteeinheit 2 erlaubt eine vorzugsweise stufenlose Verstellung der auf der Aufnahmeeinrichtung befestigten Brennerlanze 20 um die zweite Drehachse B. Genauer kann mit der Brennerhalterung 1 ein zweiter, z.B. horizontaler, Drehwinkel β (siehe Fig. 5) um die zweite Drehachse B der Brennerlanze 20 in Bezug auf die Dichtplatte 10 und deren Vertiefung 11 eingestellt werden.

Die in dem Ausführungsbeispiel der Fig. 1 bis 5 eingestellte horizontale erste Drehachse A und vertikale zweite Drehachse B schneiden sich in einem Drehpunkt C (siehe Fig. 4 und 5). Sowohl der Krümmungsmittelpunkt des Kopfes 21 der Brennerlanze 20 als auch der Krümmungsmittelpunkt der zumindest abschnittsweise kugelscheibenförmigen Vertiefung 11 liegen vorzugsweise genau in dem Drehpunkt C. Die an der Halteplatte 2 montierte Brennerlanze 20 kann also um den Drehpunkt C beliebig um beide Drehachsen A, B in einem Raumwinkel gedreht werden, ohne dass der Kopf 21 danach neu in die zumindest abschnittsweise kugelscheibenförmige Vertiefung 11 eingepasst werden muss.

Beispielsweise können aufgrund von Fertigungstoleranzen, wie in Fig. 5a dargestellt, der Krümmungsmittelpunkt M21 des Kopfes 21 der Brennerlanze 20 und der Krümmungsmittelpunkt M11 der abschnittsweise kugelscheibenförmigen Vertiefung 11 (Schnittkreis der Kugelscheibe ist in Fig. 5a mit 11a bezeichnet) nicht genau übereinander liegen, d.h. um einen Abstand d voneinander entfernt sein. In diesem Fall ist der Drehpunkt C, den die Drehachsen A, B in ihrem Schnittpunkt ausbilden, in der Nähe der Krümmungsmittelpunkte M11, M21 oder einem dieser Krümmungsmittelpunkte M11, M21 angeordnet, gegebenenfalls auch zwischen den beiden Krümmungsmittelpunkten M11, M12. Der Abstand d der Krümmungsmittelpunkte M11, M12 ist in der Fig. 5a lediglich schematisch eingezeichnet, um das Prinzip zu verdeutlichen. Der tatsächliche Abstand d ist deutlich kleiner.

In die Dichtplatte 10 kann, wie oben beschrieben, eine Kühlvorrichtung integriert sein. Vorzugsweise kann die Dichtplatte Kühlrippen aufweisen.

Anders als bei herkömmlichen Brennerhalterungen bildet erfindungsgemäß die Dichtplatte 10 einen Teil der Brennerhalterung 1. Die Halteeinheit 2 wird durch die drehbare Befestigung an der Dichtplatte auch während der Drehung um die erste Drehachse A sicher und präzise geführt. In einem Ausführungsbeispiel kann zusätzlich auch die Drehung um eine zweite Drehachse B realisiert werden. Da nach der Drehung keine Neueinpassung des Kopfes der fest mit der Halteeinheit verbundenen Brennerlanze notwendig ist, kann der erste Drehwinkel α, in einem Ausführungsbeispiel auch der zweite Drehwinkel β, besonders einfach und schnell angepasst werden. Mit der vorgeschlagenen Brennerhalterung können die Prozessbedingungen schneller optimiert und Ausfallzeiten vermieden werden. Da die Halteeinheit an der Dichtplatte befestigt und drehbar geführt ist, ist auch ohne eine komplexe Mechanik eine reproduzierbare Winkelverstellung der Brennerlanze möglich.

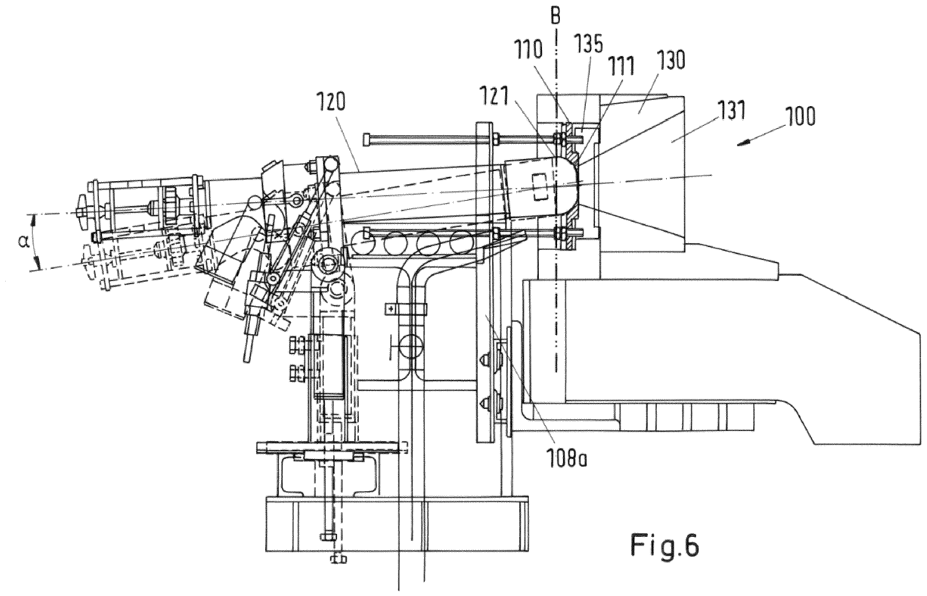

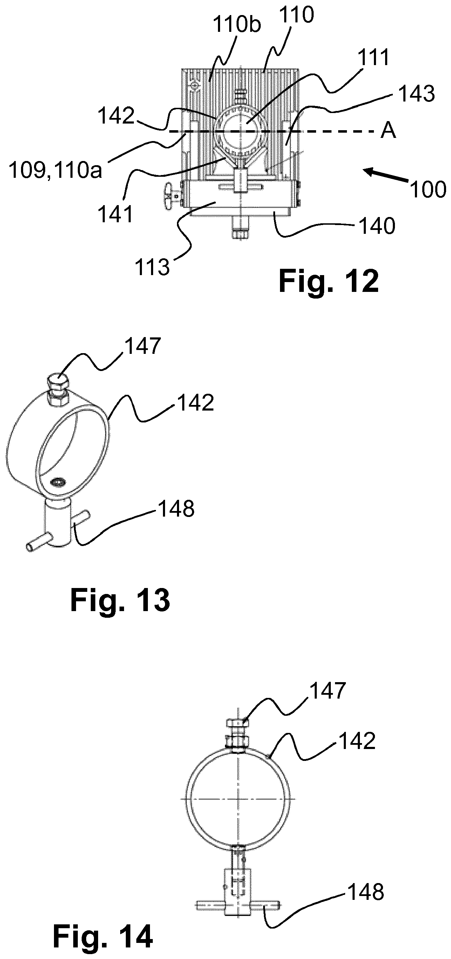

Ein zweites Ausführungsbeispiel einer erfindungsgemäßen Brennerhalterung 100 ist in den Figuren 6 bis 14 dargestellt. Dieses Ausführungsbeispiel ist prinzipiell analog zu dem in den Figuren 1 bis 5 dargestellten Ausführungsbeispiel gestaltet, sodass auf dieses Ausführungsbeispiel verwiesen wird. Die Bezugszeichen des zweiten Ausführungsbeispiels entsprechen den Bezugszeichen des ersten Ausführungsbeispiels, wobei die Bezugszeichen des zweiten Ausführungsbeispiels jeweils um 100 größer sind.

Die Brennerhalterung 100 weist eine Halteeinheit 102 mit einer Halteplatte 140, einer Aufnahmeeinrichtung 141, einem Klemmring 142 sowie einer Schwenkhalterung 113 auf. Die Aufnahmeeinrichtung 141 ist auf der Halteplatte 140 dreh- bzw. schwenkbar um das zweite Drehlager 145 befestigt. Der Klemmring 142 ist an dem der Dichtplatte 110 gegenüber liegenden Ende der rinnenförmigen Aufnahmeeinrichtung 141 angeordnet und dient dazu, die auf der Aufnahmeeinrichtung 141 liegende und in Richtung ihrer Längsachse verschiebbare Brennerlanze 120 auf der Aufnahmeeinrichtung 141 festzulegen. Hierfür wird eine durch den Klemmring 142 hindurch gehende Stellschraube 147 in den Klemmring 142 hineingeschraubt. Der Klemmring 142 ist drehbar an der Aufnahmeeinrichtung 141 befestigt. Der Drehwinkel des Klemmrings 142 kann mittels des stabförmigen Drehgriffs 148 verändert werden.

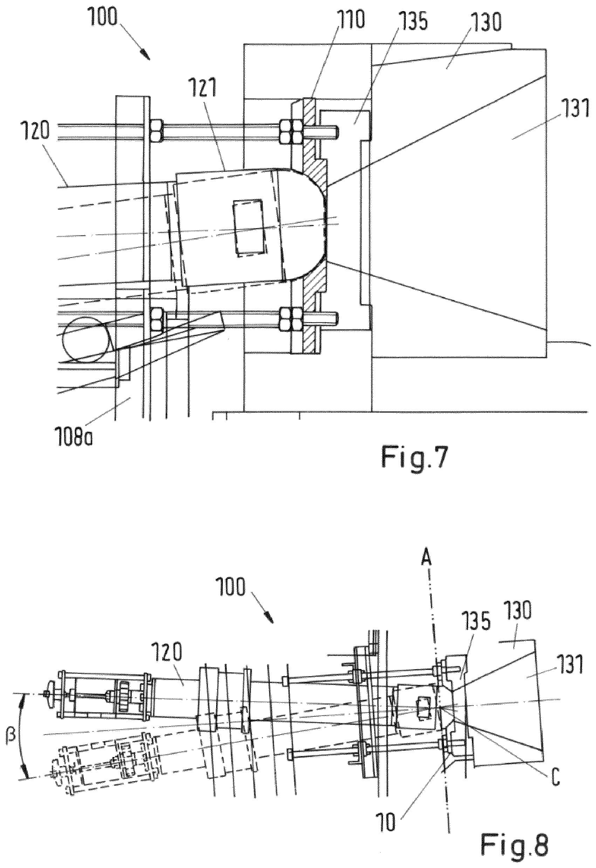

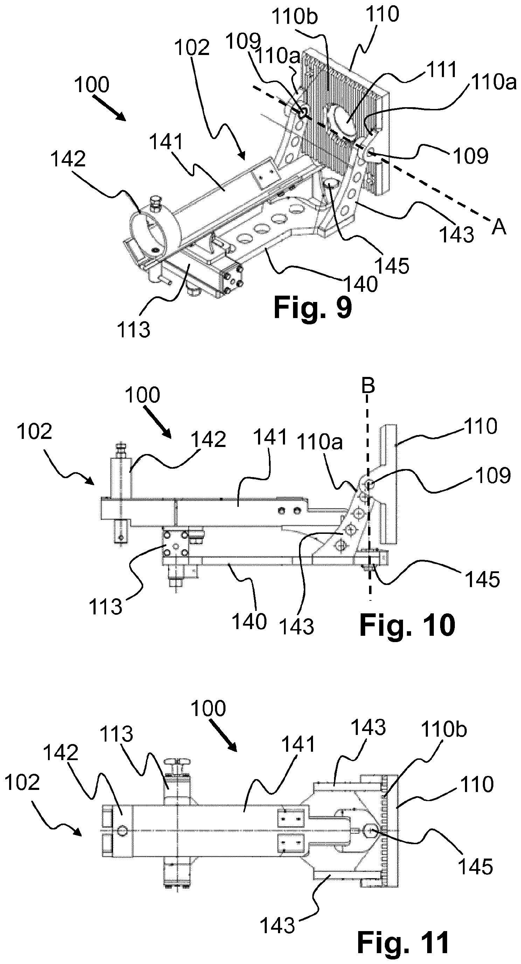

Mittels der Schwenkhalterung 113 erfolgt das Drehen bzw. Verschwenken der auf der Aufnahmeeinrichtung 141 angeordneten Brennerlanze 120 um die zweite Drehachse 145 in horizontaler Richtung (vgl. Fig. 8) um den Winkel β. Die zweite Drehachse B verläuft, wie in Fig. 10 dargestellt, vertikal. Die Aufnahmeeinrichtung 141 ist hierfür um die zweite Drehachse 145 drehbar an der Halteplatte 140 befestigt.

Alternativ zu der Anordnung mit Drehachse 145 und Schwenkhalterung 113 kann die Aufnahmeeinrichtung 141 mindestens ein Haltezapfen aufweisen, welcher um den Winkel β entlang eines entsprechend bogenförmigen Langlochs bewegt werden kann. Entsprechend wird die Aufnahmeeinrichtung 141 und die auf ihr angeordnete Brennerlanze 120 um den Winkel β um die gedachte zweite Drehachse B verschwenkt. Für jeden Haltezapfen ist je ein bogenförmiges Langloch vorgesehen, in dem der jeweilige, beispielsweise vertikal nach unten von der Aufnahmeeinrichtung 141 abstehender Haltezapfen geführt wird. Das mindestens eine bogenförmige Langloch ist in der vorzugsweise horizontal verlaufenden Halteplatte 140 angeordnet. Beim Einrichten der Brennerhalterung kann die Aufnahmeeinrichtung 141 nach der Einstellung des richtigen Winkels β mittels einer an dem jeweiligen Haltezapfen angeordneten Schraubverbindung an der Halteplatte 140 festgelegt werden. Diese alternative Ausführungsform zeichnet sich dadurch aus, dass die Halteplatte 140 in Richtung Brennerstein 130 kürzer ausgeführt werden kann, so dass das brennerstein-seitige Ende der Halteplatte 140 einen größeren Abstand vom Brennerstein 130 besitzt und dadurch die thermische Belastung der Halteplatte 140 reduziert werden kann. Diese Ausführungsform ist auch dann von Vorteil, wenn aus bautechnischen Gründen die Verwendung einer Brennerhalterung gemäß dem ersten Ausführungsbeispiel (d.h. mit einem Drehpunkt am brennerstein-seitigen Ende) nicht möglich ist.

Die Halteplatte 140 der Halteeinheit 102 ist über jeweils seitlich an der Halteplatte 140 angeordnete zwei Tragarme 143 mit der Dichtplatte 110 im Bereich der ersten Drehlager 109 verbunden. Die Halteeinheit 102 hängt an der Dichtplatte 110 und kann mittels des ersten Drehlagers 109 um die erste Drehachse A, die horizontal verläuft (vergleiche Fig. 9), in vertikaler Richtung gedreht werden. Dies ist in Fig. 6 mittels des Drehwinkels α dargestellt.

Die Dichtplatte 110 weist bei dem zweiten Ausführungsbeispiel auf der Seite, die dem Brennerstein 130 abgewandt ist, Kühlrippen 110b auf, die vertikal verlaufen. Ferner ist zwischen Dichtplatte 110 und dem Brennerstein 130 zusätzlich eine Verschleißplatte 135 vorgesehen. Diese bewirkt einen zusätzlichen Schutz der Dichtplatte 110 gegen die thermische Belastung aus dem Feuerungsraum der Glasschmelzanlage.

Die Dichtplatte 110 ist über eine Befestigungsvorrichtung 108a mit einer Basis der Glasschmelzanlage verbunden. Die Befestigungsvorrichtung 108a gewährleistet (nach der Einrichtung bzw. Justierung) der Brennerlanze 120 auf der Aufnahmeeinrichtung 141 eine kraftschlüssige Verbindung zwischen dem Kopf 121 der Brennerlanze 120 und der Dichtplatte 110 bzw. in deren Vertiefung 111.

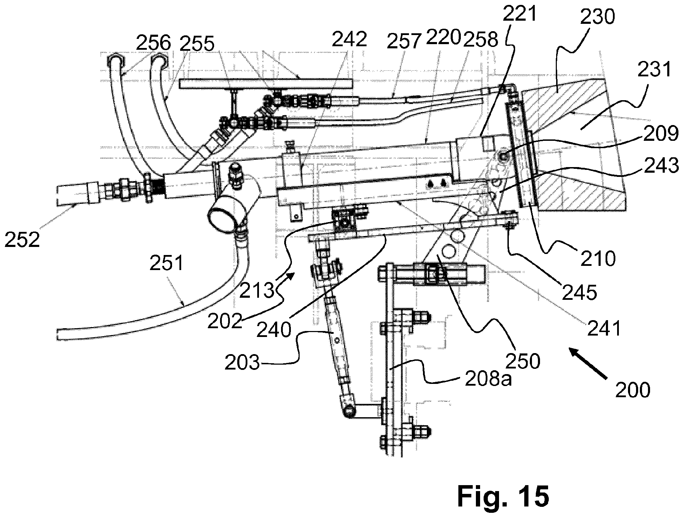

Das in Fig. 15 dargestellte dritte Ausführungsbeispiel einer Brennerhalterung 200 unterscheidet sich lediglich in der Gestaltung der Dichtplatte 210 von dem zweiten Ausführungsbeispiel. Die Bezugszeichen des dritten Ausführungsbeispiels entsprechen den Bezugszeichen des ersten und zweiten Ausführungsbeispiels, wobei die Bezugszeichen des dritten Ausführungsbeispiels jeweils um 200 größer sind als die Bezugszeichen des ersten Ausführungsbeispiels und um 100 größer sind als die Bezugszeichen des zweiten Ausführungsbeispiels.

Die Dichtplatte 210 weist eine durch die Dichtplatte 210 hindurch fließende Wasserkühlung auf, um die thermische Belastung der außen an dem Brennerstein 230 liegenden Dichtplatte 210 zu reduzieren. Das Kühlwasser wird der Dichtplatte 210 über Leitungen 255, 256, 257, 258 zu- bzw. abgeführt. Innerhalb der Dichtplatte 210 ist vorzugsweise eine beispielsweise in Schlangenform verlegte Rohrleitung vorgesehen, die das Kühlwasser über die gesamte Dichtplatte 210 verteilt.

In dem in Fig. 15 gezeigten Ausführungsbeispiel wird ferner mittels einer Zuführung 251 das Gas für die Kerndüse der Brennerlanze 220 zugeführt, während eine Zuführung 252 das Sekundärgas der Brennerlanze 220 zuführt. Das Sekundärgas wird in einem Rohr innerhalb der Brennerlanze 220 zur Mündung an dem Kopf 221 der Brennerlanze 220 geleitet und umschließt ein Innenrohr der Brennerlanze 220 für den Gas-Kernstrahl. Auf diese Weise kann eine gestufte Gaszuführung mit unterschiedlichen Gasmengen für Kernstrahl und Hüllstrahl eingestellt werden, was zur weiteren Beeinflussung des Prozesses in dem Feuerungsraum der Glasschmelzanlage dient.

Aus Fig. 15 ist ferner ersichtlich, dass analog zum ersten Ausführungsbeispiel die Drehung der Brennerlanze 220 um die erste Drehachse A mittels einer Pendelstütze 203 erfolgt, die einerseits an dem der Dichtplatte 210 gegenüber liegenden Ende der Halteplatte 240 angeordnet ist und andererseits mit der Befestigungsvorrichtung 208a verbunden ist. Die Pendelstütze 203 kann manuell oder mittels eines in Fig. 15 nicht dargestellten Stellantriebs auch automatisch betrieben werden.

Die Befestigungsvorrichtung 208a weist in ihrem oberen Abschnitt einen Tragarm 250 auf, der mit dem ersten Drehlager 209 verbunden ist und dieses bzw. die Dichtplatte 210 an dem Brennerstein 230 festgelegt und mit diesem kraftschlüssig verbindet.

Die oben beschriebenen und in den Figuren dargestellten erfindungsgemäßen Brennerhalterungen 1, 100, 200 ermöglichen auf einfache und schnelle Art und Weise eine Winkelverstellung der auf der jeweiligen Brennerhalterung 1, 100, 200 festgelegten Brennerlanze 20, 120, 220 um eine erste Drehachse A und gegebenenfalls auch um eine zweite, schräg zu der ersten Drehachse A verlaufenden Drehachse B. Vorzugsweise ist die zweite Drehachse B orthogonal zu der erste Drehachse A angeordnet. Hierbei ist nach einer Winkelverstellung eine neue Justierung der Brennerlanze 20, 120, 220 in der Vertiefung 11, 111, 211 nicht erforderlich.

### Bezugszeichenliste:

- 1, 100, 200: Brennerhalterung
- 2, 102, 202: Halteeinheit
- 3, 103, 203: Pendelstütze
- 3a: erstes Gelenk
- 4: Lager
- 5: Stellantrieb
- 6: Zylinder
- 7: Kolben
- 7a: zweites Gelenk
- 8: Befestigung
- 8a, 108a, 208a: Befestigungsvorrichtung
- 9, 109, 209: Drehlager
- 10, 110, 210: Dichtplatte
- 110a: Tragarm
- 110b: Kühlrippe
- 11, 111, 211: Vertiefung
- 11a: Kreis beschreibend die Krümmung der Vertiefung 11
- 12: Kanal
- 13, 113: Schwenkhalterung
- 14: Steuereinheit
- 20, 120, 220: Brennerlanze
- 21, 121, 221: Kopf der Brennerlanze
- 30, 130, 230: Brennerstein
- 31, 131, 231: Brenneröffnung
- 135: Verschleißplatte
- 140, 240: Halteplatte
- 141, 241: Aufnahmeeinrichtung
- 142, 242: Klemmring
- 143, 243: Tragarm
- 145, 245: zweite Drehachse
- 147: Stellschraube
- 148: Drehgriff für eine Befestigungsschraube des Klemmrings 142
- 250: Tragarm
- 251: flexible Zuführung für Sekundärgas (Hüllstrahl)
- 252: flexible Zuführung für Primärgas (Kernstrahl)
- 255, 256: Rohrleitungen für Kühlwasser - Zulauf
- 257, 258: Rohrleitungen für Kühlwasser - Rücklauf

- A: erste Drehachse
- B: zweite Drehachse
- C: Drehpunkt
- M11: Mittelpunkt des Kreises beschreibend die Krümmung der Vertiefung 11
- M21: Krümmungsmittelpunkt des Kopfes 21 der Brennerlanze 20
- d: Abstand der Mittelpunkte M11 und M21
- α: erster Drehwinkel
- β: zweiter Drehwinkel

## Patentansprüche

1. Brennerhalterung (1, 100, 200) für eine Brennerlanze (20, 120, 220) an einer Glasschmelzanlage mit
einer Halteeinheit (2, 102, 202) zur Befestigung der Brennerlanze,
einer Dichtplatte (10,110, 210) mit einem Durchgang (11, 111, 211,12), wobei die Dichtplatte (10, 110, 210) zur Befestigung an der Glasschmelzanlage eingerichtet und mit einer Vertiefung (11, 111, 211) zur Aufnahme eines Kopfes (21, 121, 221) der Brennerlanze (20, 120, 220) versehen ist, wobei die Vertiefung (11) zumindest einen Teil eines Durchgangs (11, 111, 211, 12) durch die Dichtplatte (10, 110, 210) bildet,
wobei die Halteeinheit (2, 102, 202) mit der Dichtplatte (10, 110, 210) über mindestens ein erstes Drehlager (9,109, 209) verbunden ist, um das die Halteeinheit (2, 102, 202) um eine erste Drehachse (A) drehbar oder schwenkbar ist, **dadurch gekennzeichnet, dass** das Drehlager (9, 109, 209) direkt an der Dichtplatte (10) angebracht oder eingebettet oder über einen an der Dichtplatte (10,110, 210) angeordneten Tragarm mit der Dichtplatte (10, 110, 210) verbunden ist.

2. Brennerhalterung nach Anspruch 1, **dadurch gekennzeichnet, dass** die Dichtplatte (10, 110, 210) oder der Tragarm ein erstes Lagerelement und die Halteeinheit (2, 102, 202) ein zweites Lagerelement aufweisen, wobei das erste Lagerelement und das zweite Lagerelement zusammen das erste Drehlager (9, 109, 209) bilden.

3. Brennerhalterung nach einem der Ansprüche 1 oder 2, **dadurch gekennzeichnet, dass** die Brennerhalterung (1, 100, 200) ferner eine Pendelstütze (3, 203) und einen Stellantrieb (5) zur Drehung der Halteeinheit (2, 102, 202) um die erste Drehachse (A) aufweist, wobei ein der Halteeinheit (2, 102, 202) zugewandtes Ende der Pendelstütze (3, 203) mit der Halteeinheit (2, 102, 202) und ein entgegengesetztes Ende der Pendelstütze (3, 203) mit dem Stellantrieb (5) verbunden ist.

4. Brennerhalterung nach Anspruch 3, **dadurch gekennzeichnet, dass** der Stellantrieb (5) pneumatisch und/oder elektrisch ausgeführt ist.

5. Brennerhalterung nach Anspruch 3 oder 4, **dadurch gekennzeichnet, dass** die Brennerhalterung (1) eine Steuereinheit (14) zur Ansteuerung des Stellantriebs (5) aufweist.

6. Brennerhalterung nach einem der vorhergehenden Ansprüche, **dadurch gekennzeichnet, dass** die Vertiefung (11, 111, 211) der Dichtplatte (10, 110, 210) zumindest abschnittsweise kugelscheibenförmig ausgebildet ist und dass sich die erste Drehachse (A) vorzugsweise durch einen Krümmungsmittelpunkt des kugelscheibenförmigen Abschnitts der Vertiefung (11, 111, 211) erstreckt.

7. Brennerhalterung nach einem der vorhergehenden Ansprüche, **dadurch gekennzeichnet, dass** die Brennerhalterung (100, 200) ein zweites Drehlager (145, 245) aufweist, wobei die Brennerlanze (120, 220), wenn sie an der Halteeinheit (102, 202) montiert ist, um eine durch das zweite Drehlager ausgebildete zweite Drehachse (B) gedreht werden kann, wobei die zweite Drehachse (B) schräg zu der ersten Drehachse (A) verläuft.

8. Brennerhalterung nach Anspruch 7, **dadurch gekennzeichnet, dass** sich die zweite Drehachse (B) durch den Krümmungsmittelpunkt des kugelscheibenförmigen Abschnitts der Vertiefung (11, 111, 211) erstreckt und die erste Drehachse (A) an dem Krümmungsmittelpunkt des kugelscheibenförmigen Abschnitts der Vertiefung (11, 111, 211) schneidet.

9. Brennerhalterung nach einem der Ansprüche 7 bis 8, **dadurch gekennzeichnet, dass** die zweite Drehachse (B) orthogonal zu der ersten Drehachse (A) verläuft.

10. System zur Halterung einer Brennerlanze (20, 120, 220) an einer Glasschmelzanlage mit der Brennerhalterung (1, 100, 200) nach einem der Ansprüche 1 bis 9 und einer Brennerlanze (20, 120, 220), wobei die Brennerlanze (20, 120, 220) derart an der Halteeinheit (2, 102, 202) befestigt ist, dass ein Kopf (21, 121, 221) der Brennerlanze (20, 120, 220) in der Vertiefung (11, 111, 211) der Dichtplatte (10, 110, 210) angeordnet ist und an der Innenseite der Vertiefung (11, 111, 211) anliegt.

## Claims

1. Burner holder (1, 100, 200) for a burner lance (20, 120, 220) on a glass melting plant with
a holder unit (2, 102, 202) for fastening the burner lance,
a sealing plate (10, 110, 210) with a passage (11, 111, 211, 12)
wherein the sealing plate (10, 110, 120) is configured for fastening to the glass melting plant and is provided with a recess (11, 111, 211) for receiving a head (21, 121, 221) of the burner lance (20, 120, 220), wherein the recess (11) at least forms part of a passage (11, 111, 211, 12) through the sealing plate (10, 110, 210),
wherein the holder unit (2, 102, 202) is connected with the sealing plate (10, 110, 210) by way of at least one first pivot bearing (9, 109, 209), about which the holder unit (2, 102, 202) is rotabable or pivotable about a first axis of rotation (A), **characterised in that** the pivot bearing (9, 109, 209) is applied or embedded on the sealing plate (10) or is connected with the sealing place (10, 110, 210) by way of a carrier arm arranged on the sealing plate (10, 110, 210).

2. Burner holder according to claim 1 **characterised in that** the sealing plate (10, 110, 210) or the carrier arm comprise a first bearing element and the holder unit (2, 102, 202) a second bearing element, wherein the first bearing element and the second bearing element together form the first pivot bearing (9, 109, 209) .

3. Burner holder according any one of claim 1 or 2 **characterised in that** the burner holder (1, 100, 200) also comprises a hinged support (3, 203) and an actuator (5) for turning the holder unit (2, 102, 202) about a first axis of rotation (A), wherein one end of the hinged support (3, 203) facing the holder unit (2, 102, 202) is connected to the holder unit (2, 102, 202) and an opposite end of the hinged support (3, 203) is connected to the actuator (5).

4. Burner holder according to claim 3 **characterised in that** the actuator (5) is pneumatic and/or electric.

5. Burner holder according to claim 3 or 4 **characterised in that** the burner holder (1) comprises a control unit (14) for controlling the actuator (5).

6. Burner holder according to any one of the preceding claims **characterised in that** the recess (11, 111, 211) of the sealing plate (10, 110, 210) is a least in sections spherical disk-shaped and **in that** the first axis of rotation (A) preferably extends through a centre of curvature of the spherical disk-shaped section of the recess (11, 111, 211).

7. Burner holder according to any one of the preceding claims **characterised in that** the burner holder (100, 200) comprises a second pivot bearing (145, 245) wherein the burner lance (120, 220), when it is mounted on the holder unit (102, 202) can be turned about a second axis of rotation (B) formed by the second pivot bearing, wherein the second axis of rotation (B) extends obliquely in relation to the first axis of rotation (A).

8. Burner holder according to claim 7 **characterised in that** the second axis of rotation (B) extends through the centre of curvature of the spherical disk-shaped section of the recess (11, 111, 121) and intersects the first axis of rotation (A) at the centre of curvature of the spherical disk-shaped section of the recess (11, 111, 211).

9. Burner holder according to any one of claims 7 to 8 **characterised in that** the second axis of rotation (B) extends orthogonally to the first axis of rotation (A) .

10. System for holding a burner lance (20, 120, 220) on a glass melting plant with the burner holder (1, 100, 200) according to claims 1 to 9, and a burner lance (20, 120, 220), wherein the burner lance (20, 120, 220) is fastened to the holder unit (2, 102, 202) in such a way that a head (21, 121, 221) of the burner lance (20, 120, 220) is arranged in the recess (11, 111, 211) of the sealing plate (10, 110, 210) and is in contact with the inner side of the recess (11, 111, 211) .

## Revendications

1. Porte-chalumeau (1, 100, 200), destiné à une lance de brûleur (20, 120, 220) sur une installation de fusion de verre, pourvu
d'un ensemble de maintien (2, 102, 202), destiné à fixer la lance de brûleur,
d'une plaque d'étanchéité (10,110, 210) pourvue d'un passage (11, 111, 211,12),
la plaque d'étanchéité (10, 110, 210) étant ménagée pour être fixée sur l'installation de fusion de verre et étant munie d'un creux (11, 111, 211) destiné à recevoir une tête (21, 121, 221) de la lance de brûleur (20, 120, 220), le creux (11) formant au moins une partie d'un passage (11, 111, 211, 12) à travers la plaque d'étanchéité (10, 110, 210),
l'ensemble de maintien (2, 102, 202) étant relié avec la plaque d'étanchéité (10, 110, 210) par l'intermédiaire d'au moins un premier pivot (9,109, 209), autour duquel l'ensemble de maintien (2, 102, 202) est rotatif ou pivotant autour d'un premier axe de rotation (A), **caractérisé en ce que** le pivot (9, 109, 209) est monté ou incorporé directement sur la plaque d'étanchéité (10) ou relié avec la plaque d'étanchéité (10, 110, 210) par l'intermédiaire d'un bras porteur placé sur la plaque d'étanchéité (10,110, 210) .

2. Porte-chalumeau selon la revendication 1, **caractérisé en ce que** la plaque d'étanchéité (10, 110, 210) ou le bras porteur comporte un premier élément de palier et l'ensemble de maintien (2, 102, 202) comporte un deuxième élément de palier, le premier élément de palier et le deuxième élément de palier formant ensemble le premier pivot (9, 109, 209).

3. Porte-chalumeau selon l'une quelconque des revendications 1 ou 2, **caractérisé en ce que** le porte-chalumeau (1, 100, 200) comporte par ailleurs un support oscillant (3, 203) et un actionneur (5) pour faire tourner l'ensemble de maintien (2, 102, 202) autour du premier axe de rotation (A), une extrémité du support oscillant (3, 203) qui fait face à l'ensemble de maintien (2, 102, 202) étant reliée avec l'ensemble de maintien (2, 102, 202) et une extrémité opposée du support oscillant (3, 203) étant reliée avec l'actionneur (5).

4. Porte-chalumeau selon la revendication 3, **caractérisé en ce que** l'actionneur (5) est réalisé en version pneumatique et/ou électrique.

5. Porte-chalumeau selon la revendication 3 ou 4, **caractérisé en ce que** le porte-chalumeau (1) comporte une unité de commande (14), destinée à activer les actionneurs (5).

6. Porte-chalumeau selon l'une quelconque des revendications précédentes, **caractérisé en ce que** le creux (11, 111, 211) de la plaque d'étanchéité (10, 110, 210) est conçu au moins par segment en forme de rondelle sphérique et **en ce que** le premier axe de rotation (A) s'étend de préférence à travers un centre de courbure du segment en forme de rondelle sphérique du creux (11, 111, 211).

7. Porte-chalumeau selon l'une quelconque des revendications précédentes, **caractérisé en ce que** le porte-chalumeau (100, 200) comporte un deuxième pivot (145, 245), lorsqu'elle est montée sur l'ensemble de maintien (102, 202), la lance de brûleur (120, 220) étant susceptible d'être tournée autour d'un deuxième axe de rotation (B) réalisé par le deuxième pivot, le deuxième axe de rotation (B) s'écoulant à la diagonale du premier axe de rotation (A).

8. Porte-chalumeau selon la revendication 7, **caractérisé en ce que** le deuxième axe de rotation (B) s'étend à travers le centre de courbure du segment en forme de rondelle sphérique du creux (11, 111, 211) et recoupe le premier axe de rotation (A) au centre de courbure du creux (11, 111, 211).

9. Porte-chalumeau selon l'une quelconque des revendications 7 et 8, **caractérisé en ce que** le deuxième axe de rotation (B) s'écoule de manière orthogonale par rapport au premier axe de rotation (A) .

10. Système, destiné à maintenir une lance de brûleur (20, 120, 220) sur une installation de fusion de verre pourvue du porte-chalumeau (1, 100, 200) selon l'une quelconque des revendications 1 à 9 et d'une lance de brûleur (20, 120, 220), la lance de brûleur (20, 120, 220) étant fixée sur l'ensemble de maintien (2, 102, 202), de telle sorte qu'une tête (21, 121, 221) de la lance de brûleur (20, 120, 220) soit placée dans le creux (11, 111, 211) de la plaque d'étanchéité (10, 110, 210) et soit adjacente à la face intérieure du creux (11,111,211).
